# EUROPÄISCHE PATENTANMELDUNG

(11) **EP 3 309 511 A1**
(43) Veröffentlichungstag der Anmeldung: **18.04.2018**
(21) Anmeldenummer: 16189849.9
(22) Anmeldetag: 21.09.2016
(51) Int. Cl.: G01C 15/10, G01C 15/00

(54) **LICHTSTRAHL-NIVELLIERGERÄT**

(71) Anmelder: HILTI Aktiengesellschaft, 9494 Schaan (LI)
(72) Erfinder: Schmidt, Peer, 88131 Lindau (DE)
(74) Vertreter: Hilti Aktiengesellschaft Corporate Intellectual Property

(57) **Zusammenfassung**

Das erfindungsgemäße Lichtstrahl-Nivelliergerät hat einen Tank **16,** welcher eine Flüssigkeit **17** enthält. Eine Plattform **19** schwimmt auf einer Oberfläche **18** der Flüssigkeit **17.** Eine Lichtquelle **8** dient zum Erzeugen eines Lichtstrahls **2.** Eine Optik **9** zum Festlegen einer Emissionsrichtung **10** des Lichtstrahls **2** ist zusammen mit der Lichtquelle **8** an der Plattform **19** angeordnet. Die Optik **9** ist an der Plattform **19** derart ausgerichtet ist, dass die Emissionsrichtung **10** in einer zu der Oberfläche **18** der Flüssigkeit **17** parallelen Emissionsebene E liegt.

## Beschreibung

### GEBIET DER ERFINDUNG

Die vorliegende Erfindung betrifft ein Lichtstrahl-Nivelliergerät.

Ein Lichtstrahl-Nivelliergerät ist aus der EP2930465A1 bekannt. Das Nivelliergerät emittiert einen Lichtstrahl, welcher parallel zu dem Horizont ausgerichtet ist. Der Lichtstrahl wird von einem Laser erzeugt. Der Laser ist mittels eines Pendels in dem Nivelliergerät aufgehängt. Die Schwerkraft richtet das Pendel und den Laser aus.

### OFFENBARUNG DER ERFINDUNG

Das erfindungsgemäße Lichtstrahl-Nivelliergerät hat einen Tank, welcher eine Flüssigkeit enthält. Eine Plattform schwimmt auf einer Oberfläche der Flüssigkeit. Eine Lichtquelle dient zum Erzeugen eines Lichtstrahls. Eine Optik zum Festlegen einer Emissionsrichtung des Lichtstrahls ist zusammen mit der Lichtquelle an der Plattform angeordnet. Die Optik ist an der Plattform derart ausgerichtet ist, dass die Emissionsrichtung in einer zu der Oberfläche der Flüssigkeit parallelen Emissionsebene E liegt. Die Plattform richtet die Optik mittels der Flüssigkeit horizontal aus.

Eine Ausführungsform sieht vor, dass die Emissionsebene E des Lichtstrahls unterhalb der Oberfläche der Flüssigkeit ist. Bei einer Führung durch die Luft könnten Flüssigkeitsspritzer auf der Optik den Lichtstrahl ablenken. Bei einer Führung durch die Flüssigkeit könnten Luftblasen den Strahlengang beeinflussen, allerdings lösen sich diese typischerweise von allein und schwimmen zu der Oberfläche auf. Wenigstens ein Teil der Optik kann unterhalb der Oberfläche der Flüssigkeit angeordnet sein.

Eine Ausführungsform sieht vor, dass der Tank ein Fenster aufweist, welches unterhalb der Oberfläche der Flüssigkeit angeordnet ist, und der Lichtstrahl durch das Fenster emittiert wird.

Eine Ausführungsform sieht vor, dass die Plattform durch Abstandhalter berührungsfrei zu Seitenwänden des Tanks gehalten ist. Die Abstandshalter können jeweils ein Paar aus einem Permanentmagneten und einem magnetischen Gegenstück aufweisen. Ein Berühren der Seitenwände des Tanks könnte zu einem unkontrollierten Kippen der Plattform führen.

Eine Ausführungsform sieht vor, dass durch ein Batteriepack und eine induktive Übertragungsstrecke zwischen dem Batteriepack und der Lichtquelle. Die induktive Übertragungsstrecke weist beispielsweise eine Sendespule an dem Tank und eine Empfangsspule auf der Plattform auf.

Eine Ausführungsform sieht eine federbelastete Spitze vor, welche auf einer durch den Schwerpunkt der Plattform verlaufenden vertikalen Achse angeordnet ist. Die federbelastete Spitze kann die Plattform längs der horizontalen Ebene E festhalten und übt nur einen vernachlässigbar geringen Einfluss auf die vertikale Ausrichtung der Plattform aus.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: ein Lichtstrahl-Nivelliergerät

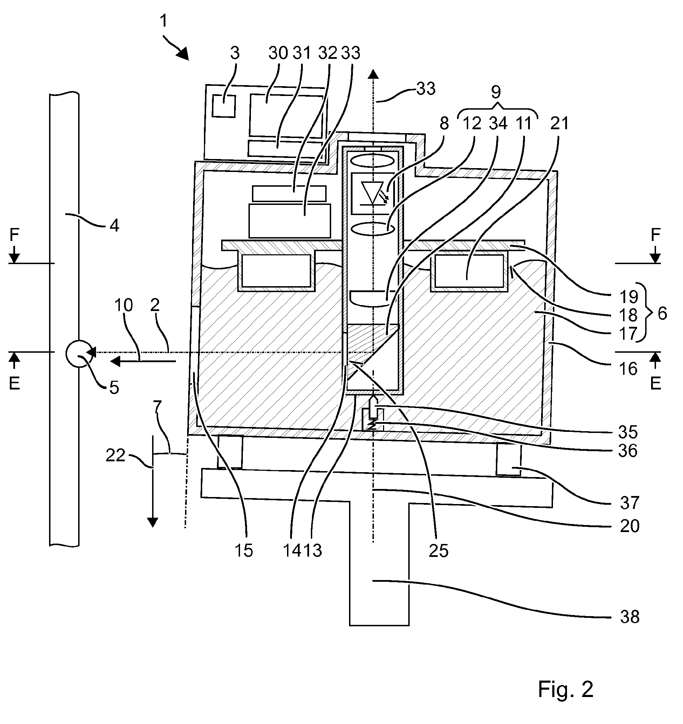

- Fig. 2: ein Lichtstrahl-Nivelliergerät

Gleiche oder funktionsgleiche Elemente werden durch gleiche Bezugszeichen in den Figuren indiziert, soweit nicht anders angegeben. Die Begriffe vertikal, horizontal, oberhalb und unterhalb beziehen sich auf die Richtung der lokalen Schwerkraft. Vertikal bezeichnet eine Richtung parallel zu der Schwerkraft; horizontal bezeichnet eine Richtung oder eine Ebene senkrecht zu der Schwerkraft. Ein erstes Objekt wird als oberhalb eines zweiten Objekts bezeichnet, wenn das erste Objekt betrachtet entlang der Richtung der Schwerkraft vor dem zweiten Objekt angeordnet ist. Das zweite Objekt ist dabei als unterhalb des ersten Objekts angeordnet.

### AUSFÜHRUNGSFORMEN DER ERFINDUNG

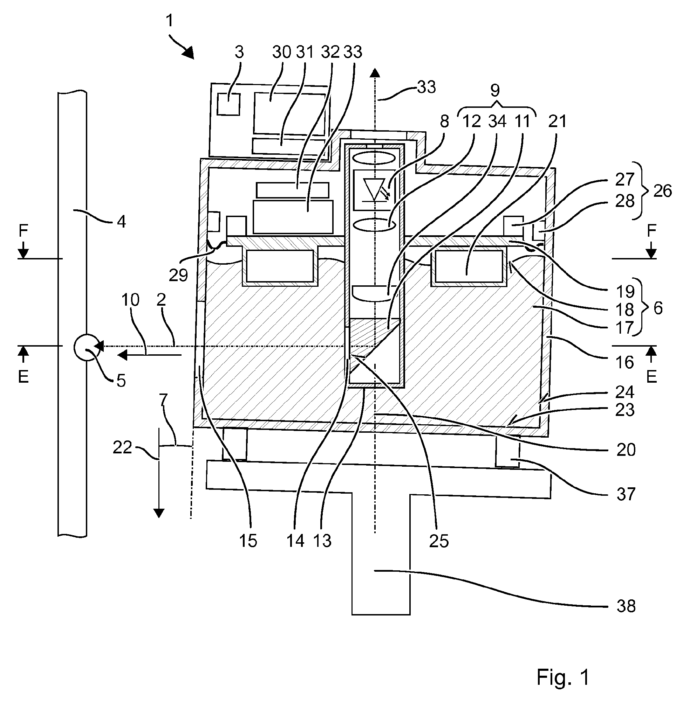

Fig. 1 zeigt schematisch ein Lichtstrahl-Nivelliergerät **1.** Der Anwender kann einen Lichtstrahl **2** mittels eines Tasters **3** ein- und ausschalten. Das Nivelliergerät **1** emittiert den Lichtstrahl **2** in einer horizontalen (Emissions-) Ebene **E.** Der Lichtstrahl **2** trifft auf eine Wand **4** und erzeugt einen Lichtpunkt **5.** Aufgrund der horizontalen Ausrichtung des Lichtstrahls **2** stimmt die vertikale Position des Lichtpunkts **5** an der Wand **4** mit der vertikalen Position des Lichtstrahl **2** an dem Nivelliergerät **1** überein. Bei einer beispielhaften Anwendung positioniert der Anwender das Nivelliergerät **1** in einer zuvor eingemessenen Referenzposition. Der Lichtstrahl **2** überträgt die vertikale Komponente der Referenzposition als Lichtpunkt **5** auf die Wand **4.** Das Nivelliergerät **1** kann anstelle eines einzelnen Lichtpunkts **5** einen in der horizontalen Ebene **E** liegenden Lichtfächer ausgeben, welcher anstelle des Lichtpunkts **5** eine horizontale Linie auf die Wand **4** projiziert.

Das Nivelliergerät **1** hat einen Ausgleichsmechanismus **6,** welcher eine geneigte Aufstellung des Nivelliergeräts **1** gegenüber der horizontalen Emissionsebene **E** ausgleicht. Für die Funktion des Nivelliergeräts **1** ist es ausreichend, dass der Anwender das Nivelliergerät **1** nach Augenmaß horizontal aufstellt. Vorzugsweise kann ein Neigungswinkel **7** von bis zu 10 Grad ausgeglichen werden.

Das Nivelliergerät **1** enthält eine Lichtquelle **8,** vorzugsweise eine Laserlichtquelle, z.B. eine Laserdiode. Die Lichtquelle **8** erzeugt einen kollimierten Lichtstrahl **2.** Der Lichtstrahl **2** durchläuft eine Optik **9** mit typischerweise mehreren optischen Elementen, welche die Strahlform und Emissionsrichtung **10** beeinflussen. Beispiele für die optische Elementen sind diffraktive Linsen, Fresnel-Linsen, Blenden, Prismen, Spiegel, optische Gitter, Lichtleiter, etc.. Bei der beispielhaften Ausführung legt ein Prisma **11** abschließend die Emissionsrichtung **10** fest. Die Emissionsrichtung **10** kann ebenfalls durch einen Spiegel, ein optisches Gitter, einen Lichtleiter, z.B. einen Glasfaser, eine Linse, etc. vorgegeben werden. Die Emissionsrichtung **10** wird zweckmäßigerweise durch das entlang des Emissionspfades letzte optische Element **11** festgelegt. Die Optik **9** kann in der Lichtquelle **8** integriert sein. Zum Beispiel enthalten Laserdioden prinzipiell Spiegel, welche eine Emissionsrichtung festlegen. Handelsübliche Laserdioden sind zumeist mit einer integrierten Linse **12** für die Strahlformung versehen. Die Lichtquelle **8** und die Optik **9** können in einer Kapsel **13** angeordnet sein. Der Lichtstrahl **2** tritt durch ein Fenster **14** der Kapsel **13** aus. Das Fenster **15** hat vorzugsweise keinen Einfluss auf Strahlform und Emissionsrichtung **10,** d.h. ist kein optisches Element.

Das Nivelliergerät **1** hat einen Tank **16,** welcher in einem externen Gehäuse angeordnet oder das externe Gehäuse bildend ist. Der Tank **16** ist teilweise mit einer Flüssigkeit **17** gefüllt. Die Flüssigkeit **17** kann Wasser oder Öl sein. Die Flüssigkeit **17** nimmt einen Teil des Volumens des Tanks **16** ein, ein verbleibender Teil ist mit Luft gefüllt. Die Grenzfläche zwischen der Flüssigkeit **17** und der Luft wird nachfolgend dem üblichen Sprachgebrauch folgend als (Flüssigkeits-) Oberfläche **18** bezeichnet. Die Grenzflächen zwischen der Flüssigkeit **17** und den Wänden des Tanks **16** werden nicht betrachtet und sind nicht Teil der Flüssigkeits-Oberfläche **18.** Die Flüssigkeits-Oberfläche **18** kann beim Aufstellen des Nivelliergeräts **1** zunächst Wellen aufweisen, welche sich allerdings in kurzer Zeit auslaufen. Die Flüssigkeits-Oberfläche **18** ist danach eben und liegt in der Ebene **F**

Das Nivelliergerät **1** hat eine schwimmende Plattform **19,** welche in der Flüssigkeit **17** schwimmt. Die Plattform **19** ist vorzugsweise symmetrisch zu einer vertikalen Achse **20.** Die Plattform **19** kann kreisförmig oder die Form eines regelmäßigen Vielecks aufweisen. Die Plattform **19** ist teilweise oberhalb der Flüssigkeits-Oberfläche **18** und teilweise unterhalb der Flüssigkeits-Oberfläche **18.** Die Relation der beiden Teile ergibt sich entsprechend der mittleren Dichte der Plattform **19** und der Dichte der Flüssigkeit **17.** Die mittlere Dichte der Plattform **19** ist geringer als die Dichte der Flüssigkeit **17.** Die Plattform **19** weist beispielsweise luftgefüllte Kammern **21** auf, welche die Plattform **19** aufschwimmen lassen. Die Kammern **21** sind vorzugsweise symmetrisch um die Achse **20** angeordnet.

Die Plattform **19** wird durch die Flüssigkeit **17** getragen. Das von der Plattform **19** verdrängte Volumen der Flüssigkeit **17** hat dasselbe Gewicht wie die Plattform **19.** Es sind keine starren mechanischen Strukturen vorgesehen, welche die Plattform **19** gegen die Schwerkraft **22** abstützen. Die Plattform **19** berührungsfrei zu dem Boden **23** des Tanks **16** und vorzugsweise auch zu den Seitenwänden **24.** Die Flüssigkeit **17** benetzt die gesamte Oberfläche des Teils der Plattform **19,** welcher unterhalb der Flüssigkeits-Oberfläche **18** ist. Ein Füllstand der Flüssigkeit **17,** d.h. der Abstand der Oberfläche **18** zu dem Boden **23,** ist größer als die vertikale Abmessung des in die Oberfläche **18** eingetauchten Teils der Plattform **19.**

Die Flüssigkeits-Oberfläche **18** liegt, bedingt durch die Schwerkraft **22,** in einer horizontalen Ebene. Die schwimmende Plattform **19** wird durch Auftriebskräfte und die Schwerkraft **22** gegenüber der Flüssigkeits-Oberfläche **18** ausgerichtet. Die Plattform **19** richtet sich somit an einer horizontalen Referenzebene aus, welche durch die Flüssigkeits-Oberfläche **18** vorgeben ist. Ein Verkippen des Tanks **16** gegenüber der horizontalen Ebene **E** hat keinen Einfluss auf die Ausrichtung der Plattform **19.** Die Plattform **19** richtet sich weiterhin an der Flüssigkeits-Oberfläche **18** aus, welche nun gegenüber dem Tank **16** geneigt ist. Die Plattform **19** ist in diesem Fall ebenfalls gegenüber dem Tank **16** geneigt.

Die Lichtquelle **8** und die Optik **9** sind auf der Plattform **19** angeordnet. Die horizontale Ausrichtung der Plattform **19** überträgt sich auf den Lichtstrahl **2.** Die Optik **9** ist auf der Plattform **19** derart justiert, dass der Lichtstrahl **2** in der horizontalen Ebene **E** emittiert wird, wenn die Plattform **19** schwimmend an der Flüssigkeits-Oberfläche **18** ausgerichtet ist. Bei der beispielhaften Darstellung hat die Plattform **19** eine durch den Schwerpunkt verlaufende vertikale Achse **20,** welche sich bei der schwimmenden Plattform **19** senkrecht zu der Flüssigkeits-Oberfläche **18** ausrichtet. Die Lichtquelle **8** ist parallel zu der Achse **20** angeordnet. Das Prisma **11** lenkt den Lichtstrahl **2** um 90 Grad in die zu der Oberfläche **18** parallele Emissionsebene **E.** Bei einer alternativen Ausführungsform ist die Lichtquelle **8** parallel zu der Emissionsebene E angeordnet.

Die Emissionsebene **E** liegt vorzugsweise unterhalb der Flüssigkeits-Oberfläche **18.** Der Lichtstrahl **2** tritt in die Flüssigkeit **17** ein. Die Lichtquelle **8** und die Optik **9** können unterhalb der Flüssigkeits-Oberfläche **18** angeordnet sein, beispielsweise in einer abgedichteten Kapsel **13** der Plattform **19.** Ein Fenster **14** der Kapsel **13** ist vollständig durch die Flüssigkeit **17** benetzt. Die vollständige Benetzung gewährleistet im Gegensatz zu einer teilweisen Benetzung, z.B. durch Spritzer oder Luftblasen, ein definiertes optisches Verhalten. Bei der dargestellten Ausführungsform ist ein letzter Teil der Optik **9** unterhalb der Flüssigkeits-Oberfläche **18** angeordnet. Der letzte Teil der Optik **9** enthält wenigstens das die Emissionsrichtung **10** festlegende, in dem Emissionspfad zuletzt angeordnete optische Element, beispielsweise das Prisma **11.** Der Lichtstrahl **2** tritt von dem Prisma **11** durch das Fenster **14** in die Flüssigkeit **17** ein. In der Darstellung ist das Fenster **14** ein zu dem Prisma **11** separates Element. Alternativ kann das Fenster **14** durch die austrittsseitige Facette **25** des zuletzt angeordneten optischen Elements **11** gebildet sein.

Der Lichtstrahl **2** tritt durch ein (externes) Fenster **15** aus dem Tank **16** aus. Das Fenster **15** ist in einer Seitenwand **24** angeordnet, d.h. deutlich geneigt zu der Emissionsrichtung **10,** z.B. senkrecht zu der Emissionsrichtung **10.** Das Fenster **15** ist vorzugsweise eine einfache plane transparente Platte, welche keinen Einfluss auf die Emissionsrichtung **10** oder die Konvergenz des Lichtstrahls **2** nimmt. Die Funktion des Fensters **15** ist einzig den Tank **16** gegen einen Austritt der Flüssigkeit **17** abzudichten und zugleich eine Emission des Lichtstrahls **2** zu ermöglichen. Das Fenster **15** ist vorzugsweise vollständig unterhalb der Flüssigkeits-Oberfläche **18** angeordnet. Das Fenster **15** ist somit ganzflächig durch die Flüssigkeit **17** benetzt. Der Lichtstrahl **2** läuft von dem internen Fenster **14** der Kapsel durch die Flüssigkeit **17** und tritt an dem externen Fenster **15** des Tanks **16** aus.

Die Plattform **19** kann in der horizontalen Ebene stabilisiert sein, um einen Kontakt mit dem Tank **16** zu vermeiden. Ein Berühren des Tanks **16** durch die Plattform **19** könnte das Ausrichten der Plattform **19** an der Flüssigkeits-Oberfläche **18** beeinflussen.

Berührungsfreie Abstandshalter **26** halten die Plattform **19** in der Mitte des Tanks **16.** Beispielhafte berührungsfreie Abstandshalter **26** basieren auf Permanentmagneten **27** und magnetischen Gegenstücken **28,** z.B. weiteren Permanentmagneten oder eisenhaltigen Körpern. Sechs Permanentmagnete **27** sind beispielsweise entlang des Umfangs der beispielsweise kreisförmigen Plattform **19** angeordnet. Die magnetischen Gegenstücke **28** sind bezogen auf die Achse **20** radial versetzt zu den Permanentmagneten **27** an den Seitenwänden **24** angeordnet. Die radialen Abstände zwischen einem Permanentmagnet und seinem paarweise zugeordneten nächsten Gegenstück sind vorzugweise identisch oder zumindest für die diametral gegenüberliegenden Paare identisch. Die paarweisen, magnetischen, in radialer Richtung wirkenden Kräfte zwischen den Permanentmagneten **27** und den Gegenstücken **28** sind im Gleichgewicht, wenn die Plattform **19** in der Mitte der horizontalen Ebene ist. Die magnetischen Kräfte innerhalb eines Paares können jeweils attraktiv oder repulsiv sein.

Alternative oder ergänzende Abstandshalter können durch Fäden **29** realisiert sein. Die Fäden **29** sind jeweils mit einem Ende an der Plattform **19** und dem anderen Ende an dem Tank **16** befestigt. Die Fäden **29** sind entlang des Umfangs der Plattform **19** verteilt angeordnet. Die Fäden **29** sind länger als der radiale Abstand der Plattform **19** zu dem Tank **16,** wenn die Plattform **19** in der Mitte das Tanks **16** ist; aber die Fäden **29** sind kürzer als der radiale Abstand der Plattform **19** zu dem Tank **16,** wenn die Plattform **19** die gegenüberliegende Seite des Tanks **16** berührt. Die Fäden **29** sind somit schlaff und haben keinen Einfluss auf die Plattform **19,** wenn die Plattform **19** in der Mitte des Tanks **16** liegt.

Eine Energieversorgung der Lichtquelle **8** erfolgt vorzugsweise durch ein Batteriepack **30,** welches an dem Tank **16** befestigt ist. Die Plattform **19** kann durch einen elektro-mechanischen Kontakt mit dem Tank **16** verbunden sein, um das Batteriepack mit der Lichtquelle **8** elektrisch zu verbinden. Vorzugsweise erfolgt die elektrische Verbindung berührungslos mittels einer induktiven Übertragungsstrecke zwischen dem Tank **16** und der Plattform **19.** Die induktive Übertragungsstrecke ist durch eine Sendespule **31** an dem Tank **16** und eine Empfangsspule **32** auf der Plattform **19** realisiert. Wechselrichter erzeugen aus dem Gleichstrom des Batteriepacks einen Wechselstrom für die Übertragung und Gleichrichter erzeugen aus dem induzierten Wechselstrom in der Empfangsspule **32** einen Gleichstrom für die Versorgung der Lichtquelle **8.** Ein elektrischer Puffer **33,** z.B. ein elektrischer Kondensator, auf der Plattform **19** gleicht Schwankungen in der elektrischen Versorgung der Lichtquelle **8** aus.

Der Lichtstrahl **2** kann durch eine Zylinderlinse **34,** ein optisches Gitter oder ein äquivalentes optisches Element aufgefächert werden. Der aufgefächerte Lichtstrahl **2** liegt in der horizontalen Emissionsebene **E.**

Neben dem Lichtstrahl **2** in der horizontalen Emissionsebene **E** kann das Nivelliergerät **1** noch zusätzliche Lichtstrahlen **33** in zu der Emissionsebene **E** definierten Richtung emittieren. Das beispielhaft dargestellte Nivelliergerät **1** emittiert einen Lichtstrahl **33** zusätzlich in einer zu der Emissionsrichtung **10** senkrechten Richtung, welcher einen Lichtpunkt zeichnet. Die Abstandshalter **26** können eingerichtet sein, kontaktlos ein Drehen der Plattform **19** um die vertikale Achse **20** zu unterbinden. Das Nivelliergerät **1** kann einen vertikale Linie mit einem Lichtstrahl **2** auf eine Wand **4** projizieren.

Die Plattform **19** kann auf einer gefederten Spitze **35** stehen. Die Spitze **35** greift auf der Achse **20** an. Die Spitze **35** dient als Abstandhalter, um ein Berühren der Seitenwände durch die Plattform **19** zu unterbinden. Die Feder **36** sorgt für einen sicheren Kontakt der Spitze **35** an der Plattform **19,** gibt aber ansonsten gegenüber der Resultierenden von Schwerkraft **22** und Auftriebskraft nach und übt quasi keine Kraft auf die Plattform **19** aus.

Das Nivelliergerät **1** kann Füße **37** an dem Tank **16** zum Aufstellen des Nivelliergeräts **1** aufweisen. Ferner kann das Nivelliergerät **1** auf einem teleskopierbaren Stativ **38** montiert werden.

## Patentansprüche

1. Lichtstrahl-Nivelliergerät mit
einem Tank (16), welcher eine Flüssigkeit (17) enthält,
einer Plattform (19), welche auf einer Oberfläche (18) der Flüssigkeit (17) schwimmt,
einer Lichtquelle (8) zum Erzeugen eines Lichtstrahls (2),
einer Optik (9) zum Festlegen einer Emissionsrichtung (10) des Lichtstrahls (2),
wobei die Lichtquelle (8) und die Optik (9) an der Plattform (19) angeordnet sind und die Optik (9) an der Plattform (19) derart ausgerichtet ist, dass die Emissionsrichtung (10) in einer zu der Oberfläche (18) der Flüssigkeit (17) parallelen Emissionsebene (E) liegt.

2. Lichtstrahl-Nivelliergerät nach Anspruch 1, **dadurch kennzeichnet, dass** die Emissionsebene (E) des Lichtstrahls (2) unterhalb der Oberfläche (18) der Flüssigkeit (17) ist.

3. Lichtstrahl-Nivelliergerät nach Anspruch **Fehler! Verweisquelle konnte nicht gefunden werden.** oder 2, **dadurch gekennzeichnet, dass** wenigstens ein Teil der Optik (9) unterhalb der Oberfläche (18) der Flüssigkeit (17) angeordnet ist.

4. Lichtstrahl-Nivelliergerät nach einem der vorhergehenden Ansprüche, **dadurch gekennzeichnet, dass** der Tank (16) ein Fenster (15) aufweist, welches unterhalb der Oberfläche (18) der Flüssigkeit (17) angeordnet ist, und der Lichtstrahl (2) durch das Fenster (15) emittiert wird.

5. Lichtstrahl-Nivelliergerät (1) nach einem der vorhergehenden Ansprüche, **dadurch gekennzeichnet, dass** die Plattform (19) durch Abstandhalter (26) berührungsfrei zu Seitenwänden (24) des Tanks (16) gehalten ist.

6. Lichtstrahl-Nivelliergerät (1) nach Anspruch 5, **dadurch gekennzeichnet, dass** die Abstandshalter (26) jeweils ein Paar aus einem Permanentmagneten (27) und einem magnetischen Gegenstück (28) aufweisen.

7. Lichtstrahl-Nivelliergerät (1) nach einem der vorhergehenden Ansprüche, **gekennzeichnet durch** ein Batteriepack (30) und eine induktive Übertragungsstrecke zwischen dem Batteriepack (30) und der Lichtquelle (8).

8. Lichtstrahl-Nivelliergerät (1) nach Anspruch 7, **dadurch gekennzeichnet, dass** die induktive Übertragungsstrecke eine Sendespule (31) an dem Tank (16) und eine Empfangsspule (32) auf der Plattform (19) aufweist.

9. Lichtstrahl-Nivelliergerät (1) nach einem der vorhergehenden Ansprüche, **gekennzeichnet durch** eine federbelastete Spitze (35), welche auf einer **durch** den Schwerpunkt der Plattform (19) verlaufenden vertikalen Achse (20) angeordnet ist.
